# EUROPÄISCHE PATENTSCHRIFT

(11) **EP 2 213 911 B1**
(45) Veröffentlichungstag und Bekanntmachung des Hinweises auf die Patenterteilung: **24.05.2017**
(21) Anmeldenummer: 09001373.1
(22) Anmeldetag: 02.02.2009
(51) Int. Cl.: F16J 15/06, F16J 15/3268, F16J 15/56, F16K 1/44

(54) **Dichtung, Dichtungsanordnung damit und deren Verwendung**
Seal assembly, seal and its use
Joint, agencement de joint en étant pourvu et son utilisation

(43) Veröffentlichungstag der Anmeldung: 04.08.2010
(73) Patentinhaber: Carl Freudenberg KG, 69469 Weinheim (DE)
(72) Erfinder: Klenk, Thomas, 69221 Dossenheim (DE); Barth, Armin, 69517 Gorxheimertal (DE); Clemens, Markus, 64385 Reichelsheim (DE); Liedtke, Ulrich, 69514 Laudenbach (DE)

(56) Entgegenhaltungen:
- WO-A-01/88422
- DE-A1- 2 440 698
- DE-A1- 2 743 501
- DE-A1-102006 025 653
- DE-U1- 20 205 467
- GB-A- 2 006 893

## Beschreibung

### Technisches Gebiet

Die Erfindung betrifft eine Dichtungsanordnung und deren Verwendung.

### Stand der Technik

Dichtungen, die in Dichtungsanordnungen zur Anwendung gelangen, sind allgemein bekannt. Die Dichtungen dichten dabei häufig zwei Maschinenelemente, beispielsweise eine Stange oder eine Welle gegen ein Gehäuse ab. Die Abdichtung erfolgt dabei zum Beispiel durch O-Ringe aus elastomerem Werkstoff, die in Klemmnuten von einem der beiden Maschinenelemente angeordnet sind und gegenüber dem anderen Maschinenelement abdichten.
Bei einer solchen Konstruktion ist häufig problematisch, den richtigen Kompromiss zwischen einer guten Abdichtwirkung während einer langen Gebrauchsdauer einerseits und möglichst geringem Verschleiß durch wenig Reibung andererseits zu finden, insbesondere dann, wenn das Volumen der Dichtung variiert, zum Beispiel abhängig von der Temperatur oder der Quellung des elastomeren Werkstoffs, hervorgerufen durch das abzudichtende Medium. Bei den vorbekannten Dichtungen und Dichtungsanordnungen ergibt sich durch Temperaturänderungen und/oder Quellung des Dichtungswerkstoffs häufig eine Volumenzunahme der Dichtung, was automatisch mit unterschiedlichen Anpresskräften der Dichtung am abzudichtenden Bauteil einhergeht. Insbesondere in der Lebensmittelindustrie gelangen Ventile zur Anwendung, bei denen O-Ringe in einer Klemmnut stark verpresst sind, damit ein Hinterwandern des O-Rings mit abzudichtendem Medium, also ein Eindringen von abzudichtendem Medium in den sogenannten Totraum der Klemmnut vermieden wird. Durch diese starke Verpressung des O-Rings innerhalb seiner Klemmnut wirkt sich eine Volumenänderung des O-Rings, beispielsweise temperaturbedingt oder durch Quellung unmittelbar auf die Anpresskraft des dynamischen Dichtbereichs des O-Rings am abzudichtenden Maschinenelement aus.
Nimmt das Volumen des O-Rings zu, erhöht sich auch die Anpresskraft an der abzudichtenden Fläche des abzudichtenden Maschinenelements und es besteht die Gefahr, dass der elastomere Werkstoff des O-Rings in die Dichtspalte extrudiert, dass es zu einer Verklemmung der beiden abzudichtenden Teile relativ zueinander kommt und zu einer Beschädigung/Zerstörung des O-Rings.

Aus der DE 10 2006 025 653 A1 ist ein aseptisches Doppelsitzventil bekannt, umfassend eine Dichtung, die an einem mehrteilig ausgebildeten Schließkörper festgelegt ist, wobei die Klemmringe der Dichtung jeweils in einer Klemmnut angeordnet sind, die von mehreren Bauteilen des Schließkörpers begrenzt sind, wobei die Klemmringe in den zugehörigen Klemmnuten kraft- und / oder formschlüssig und dichtend angeordnet sind und wobei nur der Dichtring die abzudichtende Fläche des abzudichtenden zweiten Maschinenelements dichtend anliegend berührt.

Aus der WO 01/88422 A ist ein Ventil mit elastischen Dichtelementen bekannt, umfassend eine Dichtung, die im Bereich ihrer einen Stirnseite in einem mehrteiligen Maschinenelement geklemmt und im Bereich ihrer anderen Stirnseite diesem Maschinenelement ungehaftet lose zugeordnet ist.

Aus der DE 202 05 467 U1 ist ein Ventil, insbesondere ein Doppelsitz-Leckageventil bekannt, das eine Dichtung umfasst, die in einem mehrteiligen Einbauraum angeordnet ist. Der Einbauraum wird durch einen zweiteiligen Schließkörper gebildet, wobei die beiden Teile passend zusammengefügt sind und die Fuge zwischen den beiden Teilen in der Klemmnut endet.

Aus DE 24 40 698 A1 ist eine Dichtung für ein Klappenventil bekannt, umfassend eine Dichtung, die durch Klemmringe in einer zweiteiligen Klemmnut dichtend angeordnet ist.

Aus der GB-A 2006893 ist ein Radialwellendichtring bekannt, der zwei Klemmringe umfasst, die einander mit axialem Abstand benachbart zugeordnet sind. Die Klemmnut wird durch drei Gehäuseteile begrenzt, wobei eines der Gehäuseteile innerhalb des axialen Abstands zwischen den beiden Klemmringen angeordnet ist. Der Dichtring weist eine Dichtlippe auf, die die Oberfläche einer abzudichtenden Welle dichtend umschließt.

Aus der DE 27 43 501 A1 ist ein weiterer Dichtring bekannt, der als Radialwellendichtring ausgebildet ist. Der Dichtring weist zwei wulstförmige Klemmringe auf, die in kongruent gestalteten Ausnehmungen eines Maschinenelements, das als Versteifungsteil ausgebildet ist, angeordnet sind. Die Klemmwülste sind birnenähnlich gestaltet.

### Darstellung der Erfindung

Der Erfindung liegt die Aufgabe zugrunde, die zuvor genannten Nachteile zu vermeiden. Insbesondere soll vermieden werden, dass eine Volumenveränderung der Dichtung im Bereich ihrer Klemmnut im zugehörigen Maschinenelement zu einer nachteiligen Veränderung der Anpresskraft der Dichtung am abzudichtenden Maschinenelement führt.

Diese Aufgabe wird erfindungsgemäß mit den Merkmalen von Anspruch 1 gelöst. Auf vorteilhafte Ausgestaltungen nehmen die rückbezogenen Patentansprüche Bezug.

Zur Lösung der Aufgabe ist eine Dichtungsanordnung vorgesehen, umfassend eine Dichtung, die zwischen einem ersten und einem zweiten Maschinenelement angeordnet ist, wobei die Dichtung zwei wulstförmige Klemmringe und einen Dichtring umfasst, die funktionstechnisch voneinander getrennt sind, derart, dass die Klemmringe nur zur Befestigung der Dichtung an einem ersten Maschinenelement vorgesehen sind, ohne ein zweites Maschinenelement anliegend zu berühren und dass der Dichtring nur zur Abdichtung an dem zweiten Maschinenelement vorgesehen ist, ohne die Dichtung am ersten Maschinenelement zu befestigen, wobei die Dichtung am ersten Maschinenelement festgelegt ist, wobei die Klemmringe jeweils in einer Klemmnut des ersten Maschinenelements kraft- und / oder formschlüssig und dichtend angeordnet sind, wobei nur der Dichtring die abzudichtende Fläche des abzudichtenden zweiten Maschinenelements dichtend anliegend berührt und wobei die Klemmnuten schwalbenschwanzförmig ausgebildet sind.

Hierbei ist von Vorteil, dass die Klemmringe ausschließlich zur Befestigung der Dichtung an einem ersten Maschinenelement dienen und keine Dichtfunktion haben. Auch dann, wenn die Klemmringe montagebedingt stark verpresst sind, wirken sich temperaturbedingte Volumenänderungen und / oder Volumenänderung durch Quellung des Werkstoffs nicht auf die Dichtwirkung aus, weil die Klemmringe das abzudichtende zweite Maschinenelement keinesfalls berühren und nur der Dichtring Einfluss auf die Dichtwirkung hat. Der Dichtring, der funktionstechnisch von den Klemmringen entkoppelt ist, hat nur die Aufgabe der Abdichtung der beiden Maschinenelemente gegeneinander; zur Befestigung der Dichtung am ersten Maschinenelement trägt der Dichtring demgegenüber nicht bei. Dadurch, dass der Dichtring nicht die Funktion einer Befestigung der Dichtung an einem der Maschinenelemente übernimmt und dadurch auch nicht innerhalb eines Einbauraums verpresst angeordnet ist, kann er sich bei Volumenzunahme in praktisch alle Richtungen weitgehend ungehindert ausdehnen. Die Anpresskraft, mit der der Dichtring an die abzudichtende Fläche angepresst wird, ist dadurch praktisch weitgehend konstant. Eine unerwünscht hohe Reibung, daraus resultierender Verschleiß der Dichtung und / oder Beeinträchtigungen der Funktion der beiden Maschinenelemente dadurch sind deshalb ausgeschlossen.

Die Klemmnuten sind schwalbenschwanzförmig ausgebildet. Eine derartige Ausbildung der Klemmnuten hat sich als vorteilhaft bewährt, weil dadurch die Klemmringe einerseits sicher innerhalb der Klemmnuten gehalten sind und andererseits ausreichend stark verpresst werden, um sicher zu stellen, dass das abzudichtende Medium nicht in die Toträume der Klemmnuten eindringt. Derartig ausgebildete Klemmnuten sind insbesondere vorteilhaft, wenn die Klemmringe O-Ring-förmig ausgebildet sind.

Das erste Maschinenelement weist gemäß einer vorteilhaften Ausgestaltung eine Stirnseite auf, in der die erste Klemmnut angeordnet ist und eine an die Stirnseite angrenzende Längsseite, in der die zweite Klemmnut angeordnet ist, wobei in den Klemmnuten die Klemmringe dichtend angeordnet sind und wobei der Dichtring und die Verbindungsstege den Übergang des ersten Maschinenelements von der Stirnseite zur Längsseite umschließen. Das erste Maschinenelement kann im Bereich zumindest einer Stirnseite eine Vorwölbung radial in Richtung des zweiten Maschinenelements aufweisen, so dass die Dichtlippe die abzudichtende Fläche des zweiten Maschinenelements unter elastischen Vorspannung dichtend berührt und die Klemmringe jeweils einen ausreichenden Abstand zur abzudichtenden Fläche des zweiten Maschinenelements aufweisen, so dass sie dieser abzudichtenden Fläche auch bei maximaler Volumenvergrößerung der Klemmringe mit Abstand benachbart zugeordnet sind.

Je nach Anwendungsfall können die Klemmnuten beide in der Stirnseite oder beide in der Längsseite des ersten Maschinenelements angeordnet sein.

In jedem Fall besteht für den Dichtring genug Raum, sich bei Volumenvergrößerung praktisch ungehindert in Richtung der beiden Klemmringe auszudehnen. Trotz maximaler Volumenvergrößerung bleibt die Anpresskraft des Dichtrings an die abzudichtende Fläche praktisch konstant. Eine unerwünschte Spaltextrusion und / oder erhöhter Verschleiß des Dichtrings und / oder ein Blockieren der beiden Maschinenelemente relativ zueinander durch Volumenvergrößerung des Dichtrings sind durch die erfindungsgemäße Dichtung und die erfindungsgemäße Dichtungsanordnung ausgeschlossen.

Die Klemmringe können mit dem Dichtring einstückig ausgebildet sein und/oder die Klemmringe und der Dichtring können materialeinheitlich ausgebildet sein. Die Herstellung der Dichtung ist dadurch einfach und kostengünstig möglich. Auch die Montage einer solchen Dichtung ist besonders einfach, weil durch die Einstückigkeit die Gefahr von Montagefehlern auf ein Minimum reduziert ist.

Jeweils nur ein erster Teil der Klemmringe kann mit dem Dichtring einstückig verbunden sein, wobei ein zweiter Teil der Klemmringe aus einem elastischen nachgiebigen Werkstoff besteht. Eine solche Ausgestaltung ist vorteilhaft, wenn der erste Teil der Klemmringe und der Dichtring aus PTFE bestehen. Der zweite Teil der Klemmringe besteht dann zum Beispiel aus einem elastomeren Werkstoff. Der elastomeren Werkstoff des zweiten Teils sorgt für einen sicheren Halt der Dichtung am ersten Maschinenelement und für eine gute Abdichtung der Klemmringe in den jeweiligen Klemmnuten; ohne den zweiten Teil der Klemmringe könnte der erste Teil nicht sicher und dicht am ersten Maschinenelement befestigt werden.

Nach einer vorteilhaften Ausgestaltung kann der Dichtring mittig zwischen den Klemmringen angeordnet sein. Durch eine solche Ausgestaltung sind die Gebrauchseigenschaften der Dichtung gleich, unabhängig davon, wie sich die gegeneinander abzudichtenden Maschinenelemente zueinander bewegen, also unabhängig davon, ob beispielsweise die mit der Dichtung versehende Stange innerhalb eines Gehäuses translatorisch nach oben oder nach unten bewegt wird.

Die Klemmringe können im Wesentlichen jeweils die Form eines O-Rings aufweisen. Eine derartige Gestalt hat sich bewährt, weil sie einfach und kostengünstig herstellbar ist. Außerdem haben derartige Klemmringe, wenn sie in schwalbenschwanzförmigen Einbaunuten verpresst angeordnet sind, den Vorteil, dass sie innerhalb dieser Einbaunuten hinterwanderungsfrei angeordnet sind; bei entsprechender Verpressung der Klemmringe innerhalb solcher Einbaunuten kann das abzudichtende Medium die Klemmringe nicht hinterwandern.

Der Dichtring kann zumindest eine Dichtlippe aufweisen, wobei nur die Dichtlippe mit einer abzudichtenden Fläche des abzudichtenden zweiten Maschinenelements dichtend in Berührung bringbar ist. Dadurch, dass die Dichtlippe nur die Aufgabe der Abdichtung hat und nicht zusätzlich noch weitere Aufgaben, beispielsweise die Befestigung der Dichtung am entsprechenden Maschinenelement, kann die Dichtlippe im Hinblick auf die Gebrauchseigenschaften und den jeweiligen Anwendungsfall optimiert werden, ohne dass Rücksichten auf weitere Funktionen genommen werden müssten. Im Hinblick auf eine einfache Herstellbarkeit der Dichtung kann es vorgesehen sein, dass diese insgesamt materialeinheitlich ausgebildet ist.

Davon abweichend besteht jedoch auch die Möglichkeit, unterschiedliche Materialien für die Klemmringe und den Dichtring zu verwenden, optimiert auf die jeweiligen Gegebenheiten des Anwendungsfalls. Jedenfalls ist der Dichtring frei und nicht von einem Einbaugehäuse gekammert, so dass er sich bei Volumenveränderungen ausdehnen oder zusammenziehen kann, ohne dass die Funktion des Dichtrings beeinträchtigt würde.

Die Klemmringe und der Dichtring sind jeweils mittels eines membranartigen Verbindungsstegs verbunden. Die Verbindungsstege sind dabei derart gestaltet, dass sie aufgrund eines Untermaßes, bezogen auf das erste Maschinenelement, an dem die Dichtung befestigt ist, sich wie eine Bauchbinde unter Zugspannung an das erste Maschinenelement anschmiegen und dieses spaltfrei berührt. Dadurch sind auch die Verbindungsstege praktisch als Dichtungen ausgeführt, so dass sie, zusammen mit den beiden Klemmringen in ihren Klemmnuten während der bestimmungsgemäßen Verwendung der Dichtung eine Labyrinthdichtung bilden.

Der Dichtring kann zumindest zwei in einer funktionstechnischen Reihenschaltung angeordnete Dichtlippen aufweisen. Der zwischen den beiden Dichtlippen ausgebildete Freiraum fungiert als zusätzlicher Ausweichraum, wenn sich das Volumen der Dichtlippen vergrößert. Außerdem wird durch eine derartige Ausgestaltung eine verbesserte Dichtleistung erzielt.

Das erste Maschinenelement kann durch einen Ventilteller eines Kreuzventils gebildet sein, das zweite Maschinenelement durch das Gehäuse des Kreuzventils.

Die Verwendung einer Dichtung und einer Dichtungsanordnung, wie zuvor beschrieben, zur Abdichtung eines Ventiltellers in einem Kreuzventil ist besonders vorteilhaft, weil derartige Kreuzventile häufig in der Lebensmittelindustrie oder in medizinischen Bereichen zur Anwendung gelangen und speziell in diesen Bereichen eine möglichst hohe Zuverlässigkeit sehr wichtig ist. Häufig werden Medien gegeneinander abgedichtet, die elastomere Werkstoffe der Dichtung quellen lassen, wobei auch dann das Ventil lange Zeit einwandfrei funktionieren muss, ohne sich zu verklemmen.

### Kurzbeschreibung der Zeichnung

Neun Ausführungsbeispiele der erfindungsgemäßen Dichtungsanordnung mit der erfindungsgemäßen Dichtung werden nachfolgend anhand der Figuren 1 bis 4 und 6-10 näher erläutert.

Die Figuren 1 bis 10 zeigen jeweils in schematischer Darstellung:
- Fig. 1: ein erstes Ausführungsbeispiel einer Dichtungsanordnung, bei der die Dichtung einen Dichtring mit einer Dichtlippe umfasst,
- Fig. 2: ein zweites Ausführungsbeispiel, bei dem der Dichtring mehrere Dichtlippen aufweist,
- Fig. 3: ein drittes Ausführungsbeispiel, bei dem der Dichtring zwei Dichtlippen aufweist und das erste Maschinenelement im Übergangsbereich von der Längsseite zur Stirnseite des ersten Maschinenelements im Wesentlichen rechtwinklig ausgebildet ist,
- Fig. 4: ein viertes Ausführungsbeispiel, bei dem, abweichend vom Ausführungsbeispiel aus Fig. 1, die Klemmringe zweiteilige ausgebildet sind und der Dichtring aus PTFE besteht.
- Fig. 5: ein Dichtring, der nicht zur Erfindung gehört, mit Klemmringen und kongruent gestalteten Klemmnuten, die eine vom Schwalbenschwanz abweichende Form haben.
- Fig. 6: ein sechstes Ausführungsbeispiel, bei dem die Dichtung auf der Längsseite des ersten Maschinenelements angeordnet ist.
- Fig. 7: ein siebtes Ausführungsbeispiel, bei dem die Dichtung auf der Stirnseite des ersten Maschinenelements angeordnet ist.
- Fig.8: ein achtes Ausführungsbeispiel, ähnlich dem Ausführungsbeispiel aus Fig. 6, bei dem die Klemmringe zweiteilig ausgebildet sind.
- Fig.9: ein neuntes Ausführungsbeispiel, ähnlich dem Ausführungsbeispiel aus Fig. 8, das im Bereich des Dichtrings ein in radialer Richtung elastisch nachgiebiges Federelement für eine elastisch nachgiebige Anpressung des Dichtrings radial in Richtung des zweiten Maschinenelements aufweist.
- Fig. 10: ein zehntes Ausführungsbeispiel, ähnlich den Ausführungsbeispielen aus Fig. 4 und Fig.9.

### Ausführung der Erfindung

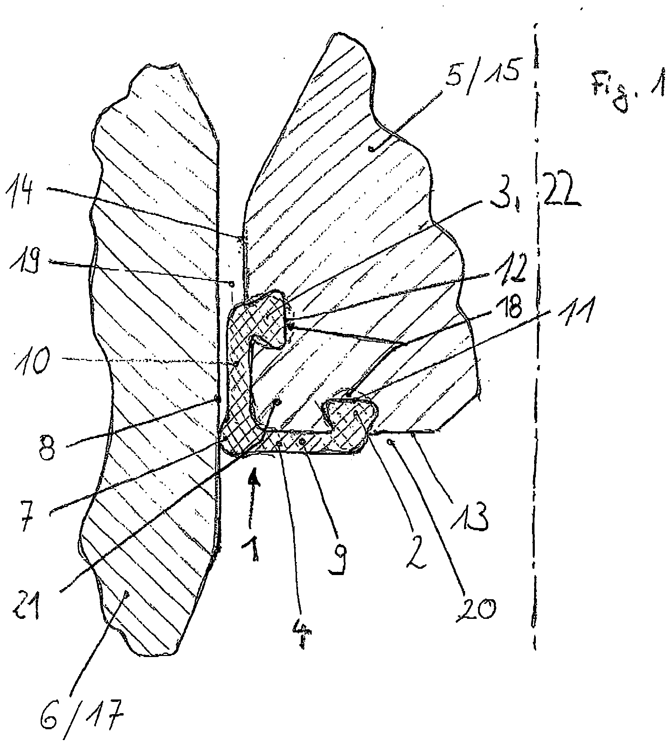

In den Figuren 1 bis 4 und 6 bis 10 sind neun Ausführungsbeispiele einer Dichtungsanordnung gezeigt, mit einer Dichtung 1. Dabei umfasst die Dichtung 1 in jedem der Ausführungsbeispiele zwei wulstförmige Klemmringe 2, 3, die einteilig oder zweiteilig ausgebildet sind, wobei die einteilig ausgebildeten Klemmringe 2, 3 jeweils die Form eines O-Rings aufweisen. Außerdem ist ein Dichtring 4 vorgesehen, der mit den Klemmringen 2, 3 einstückig ausgebildet ist. Die Klemmringe 2, 3 und der Dichtring 4 sind jeweils mittels eines membranartigen Verbindungsstegs 9, 10 miteinander verbunden.
In den hier gezeigten Ausführungsbeispielen sind die Klemmringe 2, 3 und der Dichtring 4 nicht nur einstückig sondern auch materialeinheitlich ausgebildet. Der Dichtring 4 hat zumindest eine Dichtlippe 7, die eine abzudichtende Fläche 8 eines abzudichtenden zweiten Maschinenelements 6 dichtend berührt. Entscheidend ist, dass die Klemmringe 2, 3 einerseits und der Dichtring 4 andererseits funktionstechnisch voneinander derart getrennt sind, dass die Klemmringe 2, 3 nur zur Befestigung der Dichtung 1 an dem ersten Maschinenelement 5 vorgesehen sind, ohne das Maschinenelement 6 zu berühren und dass der Dichtring 4 nur zur Abdichtung an dem zweiten Maschinenelement 6 vorgesehen ist, ohne die Dichtung 1 am ersten Maschinenelement 5 zu befestigen.

Die in den Figuren 1 bis 9 dargestellten Ausführungsbeispiele sind Ausschnitte aus einem Kreuzventil 16, das aus einem translatorisch in einem Ventilgehäuse 17 hin- und herbeweglichen Ventilteller 15 besteht.
Dieses Kreuzventil 16 gelangt in der Lebensmittelindustrie oder in der Medizintechnik zur Anwendung, um unterschiedlich abzudichtende Medien voneinander zu trennen.

In jedem der Ausführungsbeispiele weist das erste Maschinenelement 5, das den Ventilteller 15 bildet, eine Stirnseite 13 und eine an die Stirnseite 13 angrenzende Längsseite 14 auf, wobei die Klemmnuten 11, 12 in der Stirnseite 13 und / oder in der Längsseite 14 angeordnet sind. Innerhalb der Klemmnuten 11, 12, die schwalbenschwanzförmig ausgebildet sind, sind die Klemmringe 2, 3 durch Verpressung dichtend angeordnet. Es ist zu erkennen ist, dass sich durch die starke Verpressung eine so gute Abdichtung ergibt, dass ein Hinterwandern des abzudichtenden Mediums in die Toträume 18 der jeweiligen Klemmnuten 11, 12 ausgeschlossen ist.

Durch die erfindungsgemäße Ausgestaltung, nämlich durch die funktionstechnische Trennung der Klemmringe 2, 3 vom Dichtring 4, ist auch aus den Zeichnungen ersichtlich, dass die Klemmringe 2, 3 auch dann, wenn sie temperaturbedingt oder bedingt durch eine Beaufschlagung mit dem abzudichtenden Medium ihr Volumen vergrößern, niemals die abzudichtende Fläche 8 des zweiten Maschinenelements 6 berühren. Funktionsstörungen im Bewegungsablauf der beiden Maschinenelemente 5, 6 relativ zueinander und / oder unerwünschter Verschleiß der Dichtung 1 in diesem Bereich durch eine unerwünscht hohe Verpressung werden dadurch zuverlässig ausgeschlossen.

Durch die erfindungsgemäße Ausgestaltung besteht außerdem, wenn der Dichtring 4 und seine Dichtlippe 7 temperaturbedingt oder durch die Beaufschlagung mit abzudichtendem Medium ihr Volumen vergrößern, die Möglichkeit, dass das zusätzliche Volumen weitgehend widerstandsfrei in die benachbarten Ausweichräume 19, 20 ausweichen kann. Durch dieses Ausweichen verändert sich die Anpresskraft, mit der die Dichtlippe 7 die abzudichtende Fläche 8 des zweiten Maschinenelements 6 dichtend berührt, praktisch nicht, so dass Funktionsbeeinträchtigungen im Bewegungsablauf der beiden Maschinenelemente 5, 6 relativ zueinander ausgeschlossen sind, ebenso wie erhöhter abrasiver Verschleiß des Dichtrings 4 durch eine unerwünscht hohe Anpressung an der abzudichtenden Fläche 8.

In den Fig. 1 bis 4 umschließen der Dichtring 4 und die Verbindungsstege 9, 10 den Übergang von der Stirnseite 13 zur Längsseite 14 des ersten Maschinenelements 5, wobei sich die Dichtung 1 unter Zugspannung an das erste Maschinenelement 5 schmiegt und dieses dadurch praktisch spaltfrei umschließt. Zusammen mit den in den Klemmnuten 11, 12 angeordneten Klemmringe 2, 3 ergibt sich dadurch im Wesentlichen die Funktion einer Labyrinthdichtung, so dass ein Strömungskurzschluss von der ersten Klemmnut 11 am ersten Klemmring 2 vorbei entlang des Spalts zwischen dem ersten Maschinenelement 5 und den Verbindungsstegen 9, 10 am zweiten Klemmring 3 vorbei, aus der zweiten Klemmnut 12 heraus in den Nachbarraum sicher vermieden wird.

In Fig. 1 ist ein erstes Ausführungsbeispiel einer Dichtungsanordnung gezeigt. Der Übergang von der Längsseite 14 des ersten Maschinenelements 5 zu dessen Stirnseite 13 ist gerundet und als Vorsprung 21 in Richtung der abzudichtenden Fläche 8 ausgeführt, wobei sich durch den Vorsprung 21 ein Hinterschnitt 22 auf der Längsseite 14 des ersten Maschinenelements 5 ergibt. In diesen Hinterschnitt 22 und parallel zur Stirnseite 13 kann der elastomere Werkstoff, aus dem die Dichtung 1 besteht, bei Volumenvergrößerung ausweichen, ohne dass dies Auswirkungen auf die Funktion der Dichtungsanordnung hätte, insbesondere ohne dass die volumenvergrößerten Klemmringe 2, 3 das zweite Maschinenelement 6 berühren würden und ohne dass die Anpresskraft der Dichtlippe 7 an der abzudichtenden Fläche nennenswert erhöht würde.

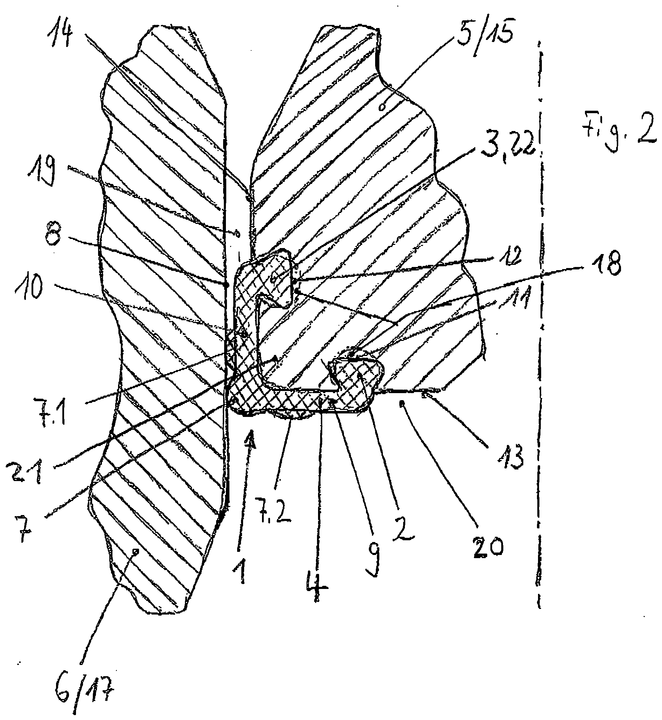

Fig. 2 unterscheidet sich vom Ausführungsbeispiel aus Fig. 1 im Wesentlichen dadurch, dass anstelle von nur einer Dichtlippe 7 drei Dichtlippen 7, 7.1, 7.2 vorgesehen sind, die mit gleichmäßigem Abstand benachbart zueinander zwischen den beiden Klemmringen 2, 3 angeordnet sind. Dadurch ist die Dichtungsanordnung noch unempfindlicher gegen Toleranzen der beiden Maschinenelemente 5, 6 und / oder der Dichtung 1, und die Dichtung ist dadurch besonders montagefreundlich.

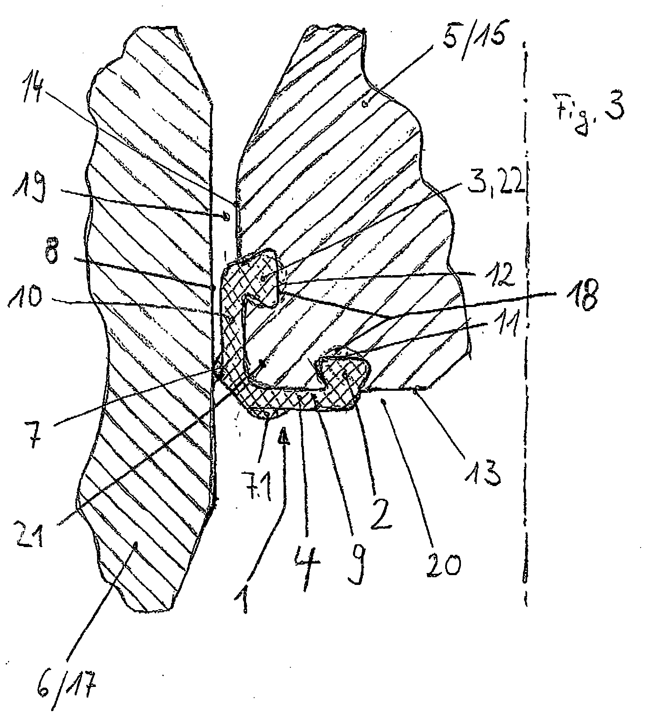

In Fig. 3 ist ein weiteres Ausführungsbeispiel gezeigt, bei dem die Stirnseite 13 und die Längsseite 14 des ersten Maschinenelements 5 im Wesentlichen rechtwinklig ineinander übergehen. Im Bereich der Kante zwischen Stirnseite 13 und Längsseite 14 sind zwei Dichtlippen 7, 7.1 angeordnet.

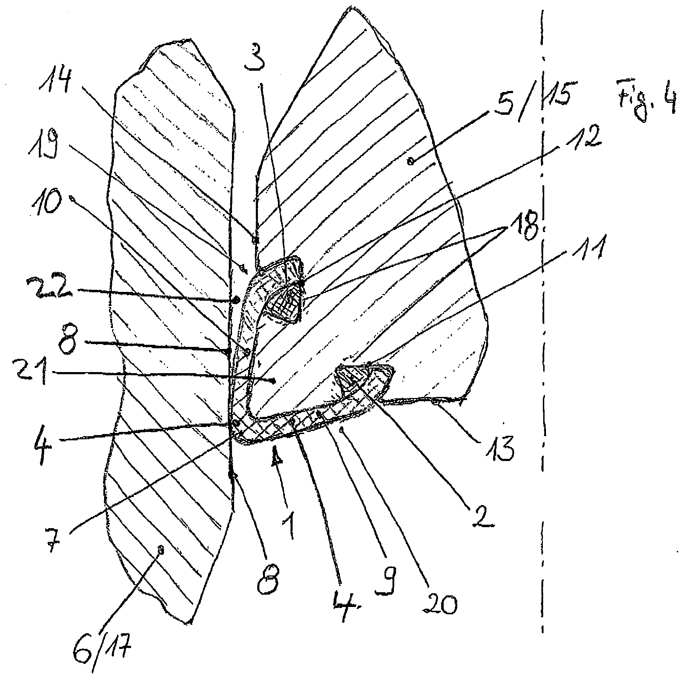

In Fig. 4 ist ein viertes Ausführungsbeispiel gezeigt, ähnlich dem Ausführungsbeispiel aus Fig. 1, wobei die Klemmringe 2, 3 zweiteilig ausgebildet sind. Der erste Teil der Klemmringe 2, 3 ist mit dem Dichtring 4 einstückig verbunden, wobei der erste Teil der Klemmringe 2, 3 und der Dichtring 4 aus PTFE bestehen. Der zweite Teil der Klemmringe 2, 3 besteht demgegenüber aus einem elastomeren Werkstoff und wird jeweils durch einen O-Ring gebildet, wobei der O-Ring für einen sicheren Halt der Klemmringe 2, 3 in der jeweiligen Klemmnut 11, 12 sorgt und dafür, dass die Klemmringe 2, 3 vom abzudichtenden Medium nicht hinterwandert werden.

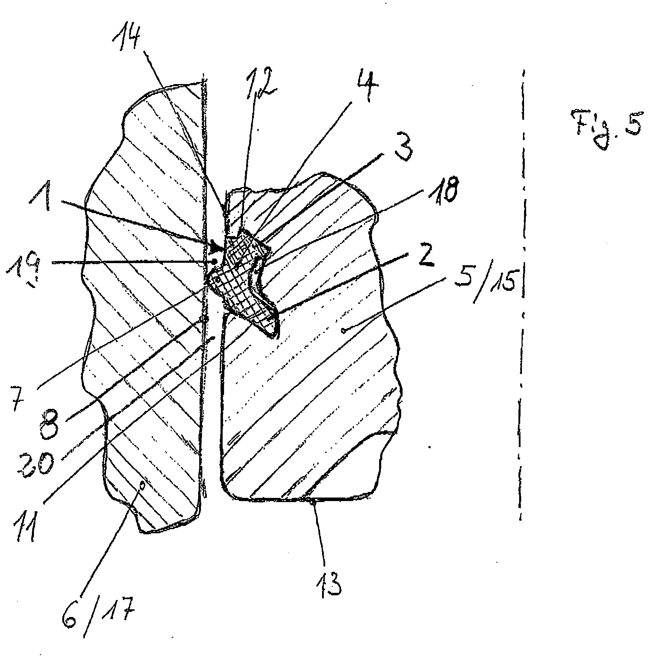

In Fig. 5 ist ein Dichtring gezeigt, der nicht zur Erfindung gehört, mit abweichend gestalteten Klemmringen 2, 3, die in kongruent gestalteten Klemmnuten 11, 12 dichtend angeordnet sind. Gehalten wird die Dichtung 1 durch die hinterschnittenen Klemmnuten 11, 12.

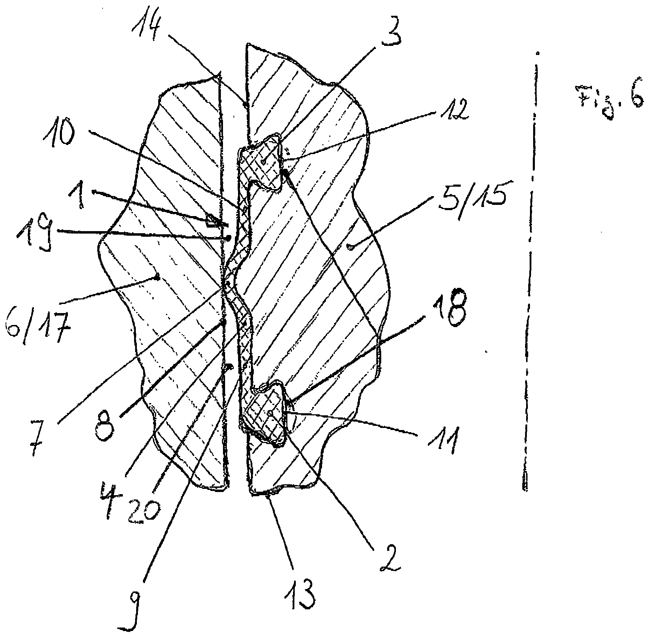

In Fig. 6 ist ein sechstes Ausführungsbeispiel gezeigt, dessen Klemmringe 2, 3 nicht, wie in den Fig. 1 bis 4 dargestellt, stirnseitig und längsseitig am ersten Maschinenelement 5 befestigt sind, sondern ausschließlich in Klemmnuten 11, 12, die in der Längsseite des ersten Maschinenelements 5 angeordnet sind. Bei Quellung des elastomeren Werkstoffs und/oder temperaturbedingter Ausdehnung weicht der Dichtring 4 in die beiden Ausweichräume 19, 20 aus, die in Längsrichtung beiderseits an die Dichtlippe 7 angrenzen. Die Anpressung an die abzudichtende Oberfläche 8 des zweiten Maschinenelements 6 bleibt deshalb auch unter solchen Betriebsbedingungen im Wesentlichen konstant.

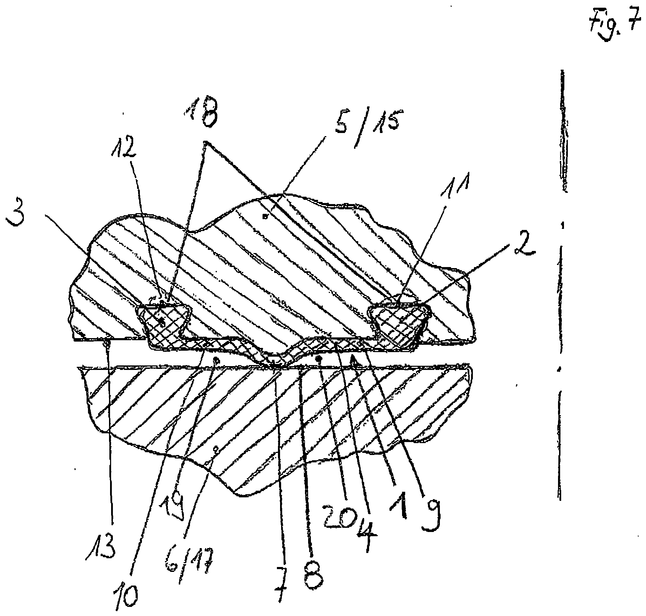

In Fig. 7 ist ein siebtes Ausführungsbeispiel gezeigt, dass sich vom sechsten Ausführungsbeispiel dadurch unterscheidet, dass die Klemmringe 2, 3 ausschließlich in Klemmnuten 11,12 angeordnet sind, die sich in der Stirnseite des ersten Maschinenelements 5 befinden.

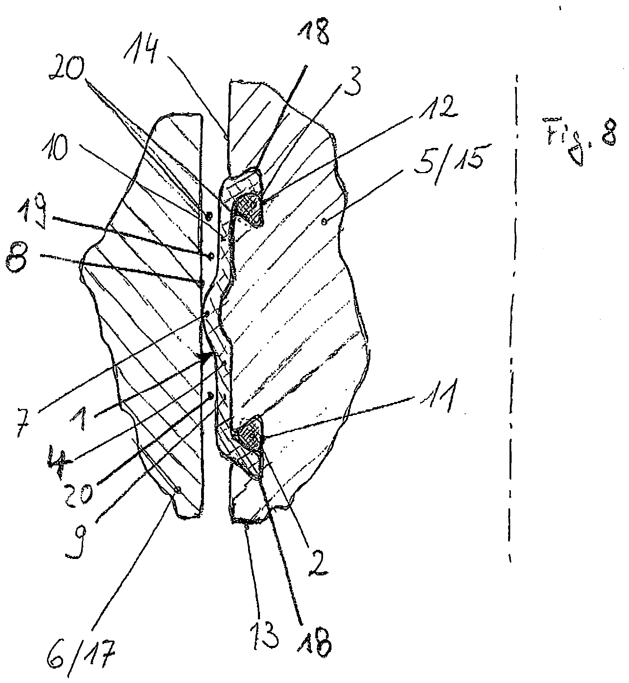

In Fig. 8 ist ein achtes Ausführungsbeispiel dargestellt, ähnlich dem Ausführungsbeispiel aus Fig. 6, wobei die Klemmringe 2, 3 zweiteilig - entsprechend den Klemmringen 2, 3 im Ausführungsbeispiel aus Fig 4 - ausgebildet sind. Der erste Teil der Klemmringe 2, 3 und der Dichtring 4 bestehen aus PTFE, wobei der erste Teil durch einen zweiten Teil ergänzt wird, der jeweils durch einen O-Ring aus elastomeren Werkstoff gebildet ist. Dieser zweite Teil sorgt für die dichtende Verpressung der Klemmringe 2, 3 in den jeweiligen Klemmnuten 11, 12.

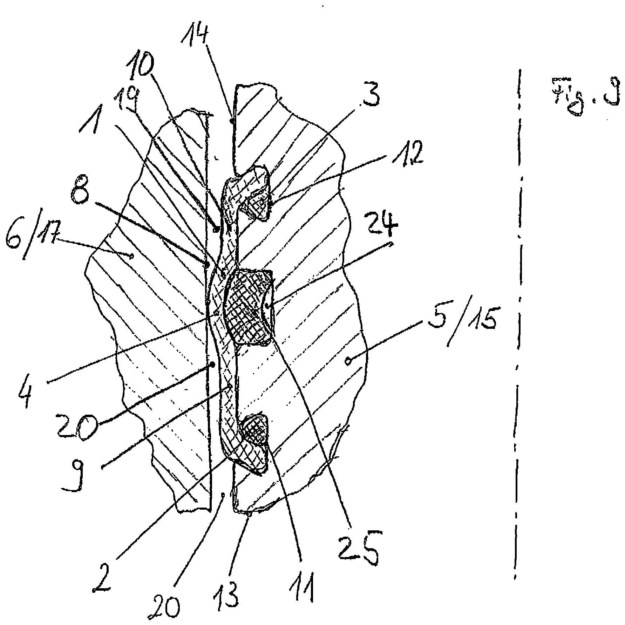

In Fig. 9 ist ein neuntes Ausführungsbeispiel gezeigt, ähnlich dem Ausführungsbeispiel aus Fig. 8, wobei das erste Maschinenelement 5 im neunten Ausführungsbeispiel im Bereich des Dichtrings 4 einen Einbauraum 24 für ein Federelement 25 aufweist. Das Federelement 25 kann aus einem elastomeren Werkstoff bestehen oder durch eine Feder aus Metall gebildet sein. Das Federelement 25 sorgt für eine Anpressung des Dichtrings 4, der im hier gezeigten Ausführungsbeispiel aus PTFE besteht, an die abzudichtende Fläche 8 des zweiten Maschinenelements 6. Der Dichtring 4 und das Federelement 25 sind einander ungehaftet zugeordnet; eine gehaftete Verbindung zwischen dem Dichtring 4 und dem Federelement 25 besteht nicht, so dass dieses Federelement 25 nicht hilft, den Dichtring 4 in seiner Position zu halten. Die funktionstechnische Trennung zwischen Dichtring 4 und Klemmringen 2, 3 ist auch in diesem Ausführungsbeispiel gegeben.

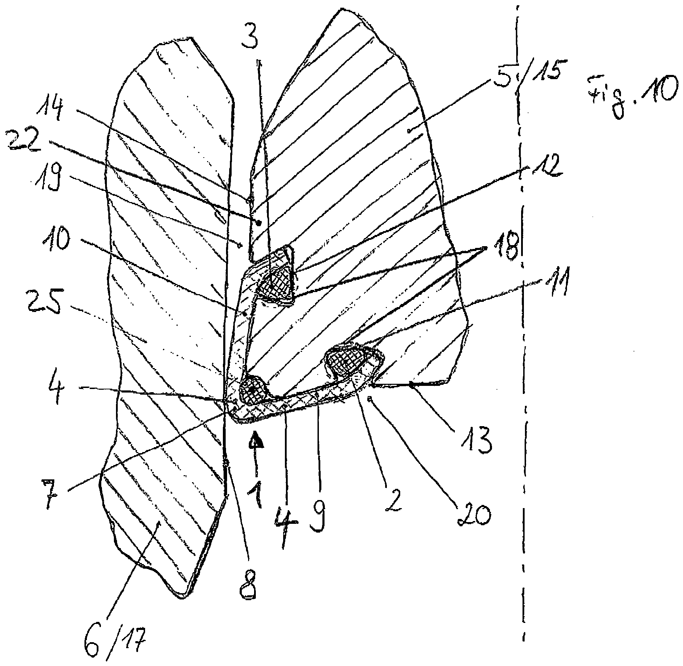

In Fig.10 ist ein zehntes Ausführungsbeispiel gezeigt, ähnlich einer Kombination aus den Ausführungsbeispielen Fig. 4 und Fig. 9. Abweichend vom Ausführungsbeispiel Fig. 4 ist im Bereich des Übergangs von der Stirnseite 13 zur Längsseite 14 des ersten Maschinenelements 5 ein Einbauraum 24 für ein Federelement 25 vorgesehen, wobei das Federelement 25 hier aus einem elastomeren Werkstoff besteht. Das Federelement 25 sorgt, wie auch im Ausführungsbeispiel Fig. 9, für eine Anpressung des Dichtrings 4 an die abzudichtende Fläche 8 des zweiten Maschinenelements 6.

## Patentansprüche

1. Dichtungsanordnung, umfassend ein erstes Maschinenelement (5), eine Dichtung (1), die zwischen dem ersten (5) und einem zweiten Maschinenelement (6) angeordnet ist, wobei die Dichtung (1) zwei wulstförmige Klemmringe (2, 3) und einen Dichtring (4) umfasst, die funktionstechnisch voneinander getrennt sind, derart, dass die Klemmringe (2, 3) nur zur Befestigung der Dichtung (1) an dem ersten Maschinenelement (5) vorgesehen sind, ohne das zweites Maschinenelement (6) anliegend zu berühren und dass der Dichtring (4) nur zur Abdichtung an dem zweiten Maschinenelement (6) vorgesehen ist, ohne die Dichtung (1) am ersten Maschinenelement (5) zu befestigen, wobei die Dichtung (1) am ersten Maschinenelement (5) festgelegt ist, wobei die Klemmringe (2, 3) jeweils in einer Klemmnut (11, 12) des ersten Maschinenelements (5) kraft- und / oder formschlüssig und dichtend angeordnet sind und wobei nur der Dichtring (4) die abzudichtende Fläche (8) des abzudichtenden zweiten Maschinenelements (6) dichtend anliegend berühren kann, **dadurch gekennzeichnet, dass** die Klemmnuten (11, 12) schwalbenschwanzförmig ausgebildet sind.

2. Dichtungsanordnung nach Anspruch 1, **dadurch gekennzeichnet, dass** die Klemmringe (2, 3) mit dem Dichtring (4) einstückig ausgebildet sind.

3. Dichtungsanordnung nach einem der Ansprüche 1 bis 2, **dadurch gekennzeichnet, dass** die Klemmringe (2, 3) und der Dichtring (4) materialeinheitlich ausgebildet sind.

4. Dichtungsanordnung nach Anspruch 1, **dadurch gekennzeichnet, dass** jeweils nur ein erster Teil der Klemmringe (2, 3) mit dem Dichtring (4) einstückig verbunden sind und dass ein zweiter Teil der Klemmringe (2, 3) aus einem elastisch nachgiebigen Werkstoff besteht.

5. Dichtungsanordnung nach Anspruch 4, **dadurch gekennzeichnet, dass** der erste Teil der Klemmringe (2, 3) und der Dichtring (4) aus PTFE bestehen.

6. Dichtungsanordnung nach einem der Ansprüche 1 bis 5, **dadurch gekennzeichnet, dass** der Dichtring (4) mittig zwischen den Klemmringen (2, 3) angeordnet ist.

7. Dichtungsanordnung nach einem der Ansprüche 1 bis 6, **dadurch gekennzeichnet, dass** die Klemmringe (2, 3) im Wesentlichen jeweils die Form eines O-Rings aufweisen.

8. Dichtungsanordnung nach einem der Ansprüche 1 bis 7, **dadurch gekennzeichnet, dass** der Dichtring (4) zumindest eine Dichtlippe (7) aufweist und dass nur die Dichtlippe (7) mit einer abzudichtenden Fläche (8) des abzudichtenden zweiten Maschinenelements (6) dichtend in Berührung bringbar ist.

9. Dichtungsanordnung nach einem der Ansprüche 1 bis 8, **dadurch gekennzeichnet, dass** die Klemmringe (2, 3) und der Dichtring (4) jeweils mittels eines membranartigen Verbindungsstegs (9, 10) verbunden sind.

10. Dichtungsanordnung nach Anspruch 9, **dadurch gekennzeichnet, dass** das erste Maschinenelement (5) eine Stirnseite (13) aufweist, in der die erste Klemmnut (11) angeordnet ist und eine an die Stirnseite (13) angrenzende Längsseite (14), in der die zweite Klemmnut (12) angeordnet ist, dass in den Klemmnuten (11, 12) die Klemmringe (2, 3) unter elastischer Vorspannung dichtend angeordnet sind und dass der Dichtring (4) und die Verbindungsstege (9, 10) den Übergang des ersten Maschinenelements (5) von dessen Stirnseite (13) zu dessen Längsseite (14) umschließen.

11. Dichtungsanordnung nach Anspruch 1, **dadurch gekennzeichnet, dass** die Klemmnuten (11, 12) beide in der Stirnseite (13) oder beide in der Längsseite (14) angeordnet sind.

12. Dichtungsanordnung nach einem der Ansprüche 1 bis 11, **dadurch gekennzeichnet, dass** der Dichtring (4) zumindest zwei in einer funktionstechnischen Reihenschaltung angeordnete Dichtlippen (7, 7.1) aufweist.

13. Dichtungsanordnung nach einem der Ansprüche 1 bis 12, **dadurch gekennzeichnet, dass** das erste Maschinenelement (5) durch einen Ventilteller (15) eines Kreuzventils (16) und das zweite Maschinenelement (6) durch ein Ventilgehäuse (17) des Kreuzventils (16) gebildet ist.

14. Verwendung einer Dichtungsanordnung nach einem der Ansprüche 1 bis 13 zur Abdichtung eines Ventiltellers (15) in einem Kreuzventil (16).

## Claims

1. Seal assembly comprising a first machine element (5), a seal (1) which is arranged between the first machine element (5) and a second machine element (6), wherein the seal (1) comprises two bead-shaped clamping rings (2, 3) and a sealing ring (4) which are separated from one another in terms of function in such a manner that the clamping rings (2, 3) are provided only for fastening the seal (1) to the first machine element (5) without adjacently touching the second machine element (6), and that the sealing ring (4) is provided only for sealing against the second machine element (6) without fastening the seal (1) to the first machine element (5), wherein the seal (1) is secured on the first machine element (5), wherein the clamping rings (2, 3) are each arranged in a force-fitting and/or or form-fitting and sealing manner in a clamping groove (11, 12) of the first machine element (5), and wherein only the sealing ring (4) can adjacently touch in a sealing manner the surface (8) to be sealed of the second machine element (6) to be sealed, **characterized in that** the clamping grooves (11, 12) are of dovetail-shaped design.

2. Seal assembly according to Claim 1, **characterized in that** the clamping rings (2, 3) are formed integrally with the sealing ring (4).

3. Seal assembly according to either of Claims 1 and 2, **characterized in that** the clamping rings (2, 3) and the sealing ring (4) are formed from the same material.

4. Seal assembly according to Claim 1, **characterized in that** in each case only a first part of the clamping rings (2, 3) are connected integrally to the sealing ring (4), and **in that** a second part of the clamping rings (2, 3) is composed of an elastically flexible material.

5. Seal assembly according to Claim 4, **characterized in that** the first part of the clamping rings (2, 3) and the sealing ring (4) are composed of PTFE.

6. Seal assembly according to one of Claims 1 to 5, **characterized in that** the sealing ring (4) is arranged centrally between the clamping rings (2, 3).

7. Seal assembly according to one of Claims 1 to 6, **characterized in that** the clamping rings (2, 3) substantially each have the shape of a O-ring.

8. Seal assembly according to one of Claims 1 to 7, **characterized in that** the sealing ring (4) has at least one sealing lip (7), and **in that** only the sealing lip (7) can be brought into contact in a sealing manner with a surface (8) to be sealed of the second machine element (6) to be sealed.

9. Seal assembly according to one of Claims 1 to 8, **characterized in that** the clamping rings (2, 3) and the sealing ring (4) are each connected by means of a membrane-like connecting web (9, 10).

10. Seal assembly according to Claim 9, **characterized in that** the first machine element (5) has an end side (13) in which the first clamping groove (11) is arranged, and a longitudinal side (14) which is adjacent to the end side (13) and in which the second clamping groove (12) is arranged, **in that** the clamping rings (2, 3) are arranged in a sealing manner in the clamping grooves (11, 12) under elastic prestress, and **in that** the sealing ring (4) and the connecting webs (9, 10) surround the transition of the first machine element (5) from its end side (13) to its longitudinal side (14).

11. Seal assembly according to Claim 1, **characterized in that** the clamping grooves (11, 12) are both arranged in the end side (13) or are both arranged in the longitudinal side (14).

12. Seal assembly according to one of Claims 1 to 11, **characterized in that** the sealing ring (4) has at least two sealing lips (7, 7.1) arranged in a functional series connection.

13. Seal assembly according to one of Claims 1 to 12, **characterized in that** the first machine element (5) is formed by a valve disc (15) of a cross valve (16) and the second machine element (6) is formed by a valve housing (17) of the cross valve (16).

14. Use of a seal assembly according to one of Claims 1 to 13 for sealing a valve disc (15) in a cross valve (16).

## Revendications

1. Agencement de joint, comprenant un premier élément de machine (5), un joint d'étanchéité (1) qui est disposé entre le premier (5) et un deuxième (6) élément de machine, le joint d'étanchéité (1) comprenant deux bagues de serrage en forme de boudin (2, 3) et une bague d'étanchéité (4), qui sont séparées l'une de l'autre techniquement de telle sorte que les bagues de serrage (2, 3) soient prévues uniquement pour la fixation du joint d'étanchéité (1) au premier élément de machine (5), sans venir en contact d'appui avec le deuxième élément de machine (6), et de telle sorte que la bague d'étanchéité (4) soit prévue uniquement pour l'étanchéité au niveau du deuxième élément de machine (6), sans fixer le joint d'étanchéité (1) au premier élément de machine (5), le joint d'étanchéité (1) étant fixé au premier élément de machine (5), les bagues de serrage (2, 3) étant disposées à chaque fois dans une rainure de serrage (11, 12) du premier élément de machine (5) par engagement par force et/ou par correspondance de formes et de manière hermétique, et seule la bague d'étanchéité (4) pouvant venir en contact en s'appliquant de manière hermétique contre la surface à étanchéifier (8) du deuxième élément de machine (6) à étanchéifier, **caractérisé en ce que** les rainures de serrage (11 ,12) sont réalisées en forme de queue d'aronde.

2. Agencement d'étanchéité selon la revendication 1, **caractérisé en ce que** les bagues de serrage (2, 3) sont réalisées d'une seule pièce avec la bague d'étanchéité (4).

3. Agencement d'étanchéité selon l'une quelconque des revendications 1 à 2, **caractérisé en ce que** les bagues de serrage (2, 3) et la bague d'étanchéité (4) sont réalisées dans le même matériau.

4. Agencement d'étanchéité selon la revendication 1, **caractérisé en ce que** seulement une première partie des bagues de serrage (2, 3) sont à chaque fois connectées d'une seule pièce à la bague d'étanchéité (4), et **en ce qu'**une deuxième partie des bagues de serrage (2, 3) se compose d'un matériau élastiquement flexible.

5. Agencement d'étanchéité selon la revendication 4, **caractérisé en ce que** la première partie des bagues de serrage (2, 3) et de la bague d'étanchéité (4) se compose de PTFE.

6. Agencement d'étanchéité selon l'une quelconque des revendications 1 à 5, **caractérisé en ce que** la bague d'étanchéité (4) est disposée centralement entre les bagues de serrage (2, 3).

7. Agencement d'étanchéité selon l'une quelconque des revendications 1 à 6, **caractérisé en ce que** les bagues de serrage (2, 3) présentent essentiellement la forme d'un joint torique.

8. Agencement d'étanchéité selon l'une quelconque des revendications 1 à 7, **caractérisé en ce que** la bague d'étanchéité (4) présente au moins une lèvre d'étanchéité (7) et **en ce que** seulement la lèvre d'étanchéité (7) peut être amenée en contact hermétique avec une surface (8) à étanchéifier du deuxième élément de machine (6) à étanchéifier.

9. Agencement d'étanchéité selon l'une quelconque des revendications 1 à 8, **caractérisé en ce que** les bagues de serrage (2, 3) et la bague d'étanchéité (4) sont à chaque fois connectées au moyen d'une nervure de connexion de type membrane (9, 10).

10. Agencement d'étanchéité selon la revendication 9, **caractérisé en ce que** le premier élément de machine (5) présente un côté frontal (13) dans lequel est disposée la première rainure de serrage (11), et un côté longitudinal (14) adjacent au côté frontal (13), dans lequel est disposée la deuxième rainure de serrage (12), **en ce que** les bagues de serrage (2, 3) sont disposées de manière hermétique sous précontrainte élastique dans les rainures de serrage (11, 12) et **en ce que** la bague d'étanchéité (4) et les nervures de connexion (9, 10) entourent la transition du premier élément de machine (5) depuis son côté frontal (13) jusqu'à son côté longitudinal (14).

11. Agencement d'étanchéité selon la revendication 1, **caractérisé en ce que** les rainures de serrage (11, 12) sont toutes deux disposées dans le côté frontal (13) ou sont toutes deux disposées dans le côté longitudinal (14).

12. Agencement d'étanchéité selon l'une quelconque des revendications 1 à 11, **caractérisé en ce que** la bague d'étanchéité (4) présente au moins deux lèvres d'étanchéité (7, 7.1) disposées techniquement dans un montage en série.

13. Agencement d'étanchéité selon l'une quelconque des revendications 1 à 12, **caractérisé en ce que** le premier élément de machine (5) est formé par un plateau de soupape (15) d'une soupape en croix (16) et le deuxième élément de machine (6) est formé par un boîtier de soupape (17) de la soupape en croix (16).

14. Utilisation d'un agencement d'étanchéité selon l'une quelconque des revendications 1 à 13 pour l'étanchéité d'un plateau de soupape (15) dans une soupape en croix (16).
